# EUROPEAN PATENT APPLICATION

(11) **EP 3 270 031 A1**
(43) Date of publication of application: **17.01.2018**
(21) Application number: 16761748.9
(22) Date of filing: 08.03.2016
(51) Int. Cl.: F16L 59/065, B32B 5/26, F25D 23/06

(54) **INSULATION, CORE MATERIAL, REFRIGERATOR, AND INSULATION MANUFACTURING METHOD**

(30) Priority: 10.03.2015 JP 2015047266; 13.03.2015 JP 2015050734; 16.03.2015 JP 2015052093; 17.03.2015 JP 2015053458; 17.03.2015 JP 2015053459; 17.03.2015 JP 2015053460; 17.03.2015 JP 2015053454; 17.03.2015 JP 2015053455; 17.03.2015 JP 2015053456; 17.03.2015 JP 2015053457; 17.03.2015 JP 2015053450; 17.03.2015 JP 2015053451
(71) Applicant: Toshiba Lifestyle Products & Services Corporation, Kawasaki-shi, Kanagawa 210-8543 (JP)
(72) Inventor: UCHIDA, Kenya, Tokyo 105-8001 (JP); UEMATSU, Ikuo, Tokyo 105-8001 (JP); HAYAMIZU, Naoya, Tokyo 105-8001 (JP); TOKUNO, Yoko, Tokyo 105-8001 (JP); NAKA, Tomomichi, Tokyo 105-8001 (JP); TANAKA, Masayuki, Tokyo 105-8001 (JP); TERADA, Takahiro, Tokyo 105-8001 (JP)
(74) Representative: Henkel, Breuer & Partner
(86) International application number: PCT/JP2016/057131
(87) International publication number: WO 2016/143780

(57) **Abstract**

Insulation according to an embodiment of the present invention is provided with the following: a core material formed by a small-diameter fiber material having a micro-order to nano-order fiber diameter; and a reinforcing means for reinforcing the strength of the core material.

## Description

### Technical Field

Embodiments of the present invention relate to a heat insulation material, a core material constituting a heat insulation material, a refrigerator provided with a heat insulation material, and a manufacturing method of a heat insulation material.

### Background Art

In the past, there has been considered a heat insulation material configured to contain a core material having a heat insulation function in an outer packaging (e.g., see Patent Literature 1). It has been considered in recent years that a core material of this kind of heat insulation material is constituted by fiber materials. Then, a fiber diameter of the fiber material constituting the core material is made smaller such that a contact area between the fiber materials can be reduced to attain improvement in heat insulation performance. Therefore, an attempt has been made to make the fiber diameter of the fiber material constituting the core material smaller. However, if the fiber diameter of the fiber material constituting the core material is made smaller, a strength of the fiber material itself becomes deficient, and thus, a strength of the core material becomes deficient. For this reason, when an inside of the outer packaging containing the core material is depressurized, for example, the fiber material is compressed to decrease a thickness of the heat insulation material, and at the same time, the contact area between the fiber materials increases to degrade the heat insulation performance.

In a technical field of this kind of heat insulation materials, it has been considered in recent years that a non-woven fabric is formed of fiber and numerous non-woven fabrics are laminated to constitute the core material of the heat insulation material. However, the work of laminating the numerous non-woven fabrics is burdensome. The non-woven fabrics, each of which is formed into a sheet-like shape, are difficult to deal with. Therefore, the heat insulation material of which the core material is formed by laminating numerous non-woven fabrics is required to improve in its productivity. The sheet-like non-woven fabric is deficient in its stiffness. Therefore, for example, when the core material in put into the outer packaging and the inside of the packaging is vacuumized to form a vacuum heat insulation material, the non-woven fabric is compressed to increase the contact area between the fibers, causing the heat insulation performance to be degraded.

The heat insulation material of related art is formed by containing in the outer packaging the core material which is relatively hard and difficult to freely form. For this reason, a planar-shaped heat insulation material can be easily obtained, but it is difficult to obtain a heat insulation material having a complex shape, such as a three-dimensional shape.

It has been also considered in the past that the core material of the heat insulation material is formed of short glass fibers. For example, Patent Literature 2 discloses that an average fiber diameter of this kind of short glass fiber is made to be 3 to 5 (µm. However, the fiber having the average fiber diameter of 3 to 5 (µm has a larger contact area between the different fibers, which deceases a thermal contact resistance, that is, a degree of thermal non-conductivity. Therefore, the sufficient heat insulation performance cannot be obtained.

### Citation List

### Patent Literature

Patent Literature 1: Japanese Patent Laid-Open No. 2006-105286
Patent Literature 2: Japanese Patent Laid-Open No. 2009-299764

### Summary of Invention

### Technical Problem

An embodiment provides a heat insulation material capable of compensating strength deficiency of a core material and suppressing degradation of a heat insulation performance even in case where the core material is constituted by a fiber material having a thin fiber diameter, a refrigerator provided with the heat insulation material, and a manufacturing method of the heat insulation material.

An embodiment provides a heat insulation material capable of attaining improvement in its productivity and suppressing degradation of a heat insulation performance, a core material constituting the heat insulation material, a refrigerator provided with the heat insulation material, and a manufacturing method of the heat insulation material.

An embodiment provides a heat insulation material of which a general shape can be freely designed, a refrigerator provided with the heat insulation material, and a manufacturing method of a heat insulation material of which a general shape can be freely designed.

An embodiment relates to a heat insulation material formed of a fiber which is made of an inorganic material, and has an object to attain improvement in its heat insulation performance. An embodiment provides a core material constituting a heat insulation material, and a refrigerator provided with the heat insulation material.

### Solution to Problem

A heat insulation material according to an embodiment includes a core material constituted by a thin diameter fiber material having a fiber diameter of micro order to nano order, and reinforcing means for reinforcing a strength of the core material.

A manufacturing method of a heat insulation material according to an embodiment includes a step of providing reinforcing means for reinforcing a strength of a core material, the core material being constituted by a thin diameter fiber material having a fiber diameter of micro order to nano order.

A heat insulation material according to an embodiment includes a core material formed by winding a belt-like continuous non-woven fabric in a continuous state. The non-woven fabric is formed of a resin fiber.

A manufacturing method of a heat insulation material according to the embodiment is a manufacturing method of a heat insulation material including a core material, the method including forming a belt-like continuous non-woven fabric formed of a resin fiber, and forming the core material by winding the non-woven fabric in a continuous state.

A heat insulation material according to an embodiment includes a core material constituted by a fiber, and a supporting material maintaining a shape of the core material, the supporting material constituting the core material. The supporting material has a heat insulation surface corresponding part corresponding to a heat insulation surface of the core material, and has a shape that normal line directions at at least two positions on the heat insulation surface corresponding part intersect each other.

A manufacturing method of a heat insulation material according to an embodiment is a method of manufacturing a heat insulation material including a core material constituted by a fiber, the method including a supporting material putting-in step of putting a supporting material constituting the core material into an outer packaging. The supporting material maintains a shape of the core material, has a heat insulation surface corresponding part corresponding to a heat insulation surface of the core material, and has a shape that the normal line directions at at least two positions on the heat insulation surface corresponding part intersect each other.

A heat insulation material according to an embodiment includes a core material constituted by a fiber made of an inorganic material. The fiber is a long fiber having at least one point where the fiber contacts itself. The fiber is a fine fiber of which an average fiber diameter is 1 µm or less.

### Brief Description of Drawings

[Figure 1] Figure 1 is a sectional view showing an exemplary configuration of a heat insulation material according to a first embodiment.
[Figure 2] Figure 2 is an enlarged view showing a part of a fiber material:
[Figure 3] Figure 3 is a diagram showing an exemplary configuration of a fiber material (no. 1).
[Figure 4] Figure 4 is a diagram showing an exemplary configuration of a fiber material (no. 2).
[Figure 5] Figure 5 is a flowchart showing an example of a manufacturing method of a heat insulation material (no. 1).
[Figure 6] Figure 6 is a flowchart showing an example of a manufacturing method of a heat insulation material (no. 2).
[Figure 7] Figure 7 is a longitudinal sectional lateral view showing an exemplary configuration of a main body unit of a refrigerator.
[Figure 8] Figure 8 is a longitudinal sectional front view showing an exemplary configuration of the main body unit of the refrigerator.
[Figure 9] Figure 9 is a sectional view showing an exemplary configuration of a heat insulation material according to a second embodiment.
[Figure 10] Figure 10 is a sectional view showing an exemplary configuration of a core material.
[Figure 11] Figure 11 is a sectional view showing an exemplary configuration of a non-woven fabric.
[Figure 12] Figure 12 is a diagram showing an example of a manufacturing method of a heat insulation material.
[Figure 13] Figure 13 is a schematic perspective view showing a heat insulation box of a refrigerator.
[Figure 14] Figure 14 is a schematic perspective view showing a vacuum heat insulation panel assembly for a refrigerator.
[Figure 15] Figure 15 is a diagram showing a modification example of a heat insulation material.
[Figure 16] Figure 16 is a sectional view showing an exemplary configuration of a heat insulation material according to a third embodiment (no. 1).
[Figure 17] Figure 17 is a sectional view showing an exemplary configuration of a heat insulation material (no. 2) .
[Figure 18] Figure 18 is a sectional view showing an exemplary configuration of a supporting material (no. 1).
[Figure 19] Figure 19 is a sectional view showing an exemplary configuration of a supporting material (no. 2).
[Figure 20] Figure 20 is a sectional view showing an exemplary configuration of a fiber (no. 1).
[Figure 21] Figure 21 is a perspective view showing an exemplary configuration of a fiber.
[Figure 22] Figure 20 is a sectional view showing an exemplary configuration of a fiber (no. 2).
[Figure 23] Figure 23 is a flowchart showing an example of a manufacturing method of a heat insulation material (no. 1).
[Figure 24] Figure 24 is a flowchart showing an example of a manufacturing method of a heat insulation material (no. 2).
[Figure 25] Figure 25 is a perspective view showing an exemplary configuration of a supporting material for a refrigerator.
[Figure 26] Figure 26 is a sectional view showing an exemplary configuration of a heat insulation material for a refrigerator.
[Figure 27] Figure 27 is a sectional view showing an exemplary configuration of a refrigerator.
[Figure 28] Figure 28 is a sectional view showing a modification example of a supporting material.
[Figure 29] Figure 29 is a sectional view showing an exemplary configuration of a heat insulation material according to a fourth embodiment.

### Description of Embodiments

Hereinafter, plural embodiments are described based on the figures. Note that elements virtually the same are designated by the same reference sign in the embodiments, and the description thereof is omitted.

### (First Embodiment)

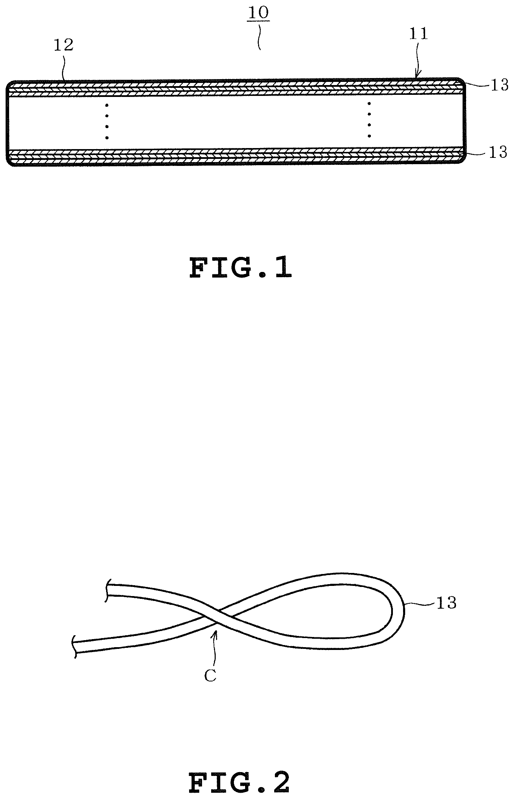

A heat insulation material 10 illustrated in Figure 1 is configured to contain a core material 11 constituting a main portion thereof within an outer packaging 12. The core material 11 is constituted by a fiber material 13. The outer packaging 12 constitutes a surface part of the heat insulation material 10. The outer packaging 12, which is a so-called laminate material made by depositing metal or metal oxide on one layer or two or more layers of resin film, has low gas permeability and high airtightness, for example. In this case, the outer packaging 12 is formed into a bag-like shape capable of containing the core material 11. The outer packaging 12 containing the core material 11 is sealed after its inside is depressurized until the inside pressure becomes almost vacuum. This forms the outer packaging 12 containing the core material 11 as the vacuum heat insulation material 10.

The fiber material 13 is formed of resin fiber materials tangling each other at random. In this case, the fiber material 13 is made by an electrospinning method. The fiber material 13 made by the electrospinning method is formed into a thin fiber having a fiber diameter of about 0.1 nm to 10 µm and into a long fiber having a length of 1000 or more times its outer diameter, for example. Moreover, the fiber material 13 made by the electrospinning method has a shape generally not linear but curbed at random in a crimped fashion. This allows the fiber material 13 to be configured to have at least one point C where each fiber contacts itself as illustrated in Figure 2. Therefore, the fiber material 13 has many fibers tangling with each other.

In this case, the fiber material 13 is from an organic polymer having a density smaller than glass. Making the fiber material 13 of the polymer having the density smaller than glass can attain weight reduction of the fiber material 13. The fiber material 13 can be formed by mixing one polymer or two or more polymers selected from polystyrene, polycarbonate, polymethylmethacrylate, polypropylene, polyethylene, polyethylene terephthalate, polybutylene terephthalate, polyamide, polyoxymethylene, polyamide-imide, polyimide, polysulfone, polyethersulfone, polyetherimide, polyetheretherketone, polyphenylene sulfide, modified polyphenylene ether, syndiotactic polystyrene, liquid crystal polymer, urea resin, unsaturated polyester, polyphenol, melamine resin, epoxy resin, and copolymer containing these.

In the case where the fiber material 13 is made by the electrospinning method, the above polymer is liquefied. As a solvent, volatile organic solvents such as isopropanol, ethylene glycol, cyclohexanone, dimethylformamide, acetone, ethyl acetate, dimethylacetamide, N-methyl-2-pyrrolidone, hexane, toluene, xylene, methyl ethyl ketone, diethyl ketone, butyl acetate, tetrahydrofuran, dioxane, and pyridine, or water can be used, for example. The solvent may be one selected from the above solvents, or a plurality of kinds of the solvents may be mixed to be used. The present application invention is not limited to the above solvents, which are merely examples.

In the case where the fiber material 13 is made by the electrospinning method, many fibers can be made to tangle with each other, which makes it possible to form a non-woven fabric-like fiber sheet at the same time as the spinning. Making the fiber material 13 by the electrospinning method allows the fiber diameter of micro order to nano order to be obtained such that the thickness per one sheet of the fiber sheet can be made very thin. The core material 11 of the heat insulation material 10 is formed by laminating the fiber materials 13 each of which is formed into the non-woven fabric-like fiber sheet in this way.

Note that if a volume of airspaces among between the fiber materials tangling each other is made smaller, the number of the airspaces increases to further improve the heat insulation property. Therefore, the fiber diameter of the fiber material 13 is preferably equal to or less than about 5 µm, and further preferably equal to or less than 1 µm, that is, a fiber diameter of the nano order. To the fiber material 13, various inorganic fillers may be added such as silicon oxide, metal hydroxide, carbonate, hydrosulfate, and silicate, for example. Adding the inorganic filler to the fiber material 13 allows the heat insulation property to be maintained and can attain improvement in the strength thereof. As the added inorganic filler, one kind or two or more kinds selected from wollastonite, potassium titanate, xonotlite, gypsum fibers, aluminum port rate, MOS (basic magnesium sulfate), aramid fibers, carbon fibers, glass fibers, talc, mica, and glass flakes may be also added.

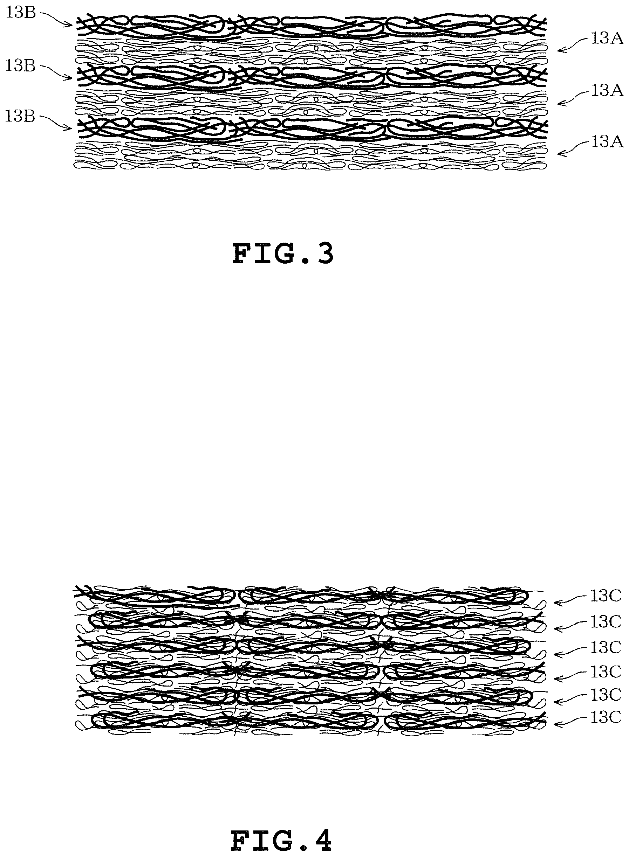

Next, a description is given particularly of an exemplary configuration concerning the fiber material 13 of the heat insulation material 10. In an exemplary configuration illustrated in Figure 3, the fiber material 13 is formed of a plurality of sheet-like fiber layers. The fiber material 13 may have several hundreds to several thousands or more of fiber layers laminated, for example. In this case, the fiber material 13 is formed of thin diameter fiber layers 13A and thick diameter fiber layers 13B. The thin diameter fiber layer 13A is a sheet-like fiber layer constituted by a thin diameter fiber material having a fiber diameter of micro order to nano order. The thick diameter fiber layer 13B is a sheet-like fiber layer constituted by a thick diameter fiber material having a fiber diameter thicker than the thin diameter fiber material. In this case, the thick diameter fiber material has the fiber diameter at least two to three times the thin diameter fiber material.

The thin diameter fiber material can be obtained by preparing a solution by dissolving polyamide-imide in the above solvent, for example, at 10 to 40 wt %, and spinning the solution by an electrospinning device not shown by means of a force of an electrical field. Then, the thin diameter fiber layer 13A can be obtained at the same time as this spinning. The thick diameter fiber material can be obtained by preparing a solution by dissolving polyamide-imide in the above solvent, for example, at 10 to 40 wt %, and spinning the solution by an electrospinning device not shown by means of a force of an electrical field. Then, the thick diameter fiber layer 13B can be obtained at the same time as this spinning. Note that the manufacturing method of the thin diameter fiber material and the thick diameter fiber material, and the thin diameter fiber layer 13A and the thick diameter fiber layer 13B is not limited to the above, and various manufacturing method can be adopted.

In this case, the heat insulation material 10 is configured to have the thin diameter fiber layers 13A and the thick diameter fiber layers 13B laminated alternately one by one. At this time, the number of laminated layers of the thin diameter fiber layer 13A and the thick diameter fiber layer 13B may be at least 100 or more in total. The thick diameter fiber layer 13B, which is constituted by the thick diameter fiber material thicker than the thin diameter fiber material constituting the thin diameter fiber layer 13A, has higher stiffness and strength than the thin diameter fiber layer 13A. Therefore, the thick diameter fiber layer 13B reinforces stiffness and strength of the thin diameter fiber layer 13A, and thus, of the core material 11. Then, the stiffness and strength of the core material 11 being reinforced in this way heightens the stiffness and strength entirely of the heat insulation material 10. For this reason, when the inside of the outer packaging 12 containing the core material 11 is depressurized, for example, the fiber material 13 is unlikely to be compressed. Therefore, the increase of the contact area between the fiber materials 13 can be suppressed, and thus, the heat insulation performance can be improved.

In order to attain improvement in the heat insulation performance, the heat insulation material 10, in a configuration mode where the core material 11 is constituted basically by the thin diameter fiber layer 13A, further includes the thick diameter fiber layer 13B. Then, the thick diameter fiber layer 13B is constituted by the thick diameter fiber material thicker than the thin diameter fiber material to have a function as reinforcing means for reinforcing the strength of the core material 11. According to this configuration, even in a case where the core material 11 is constituted by the fiber material having a thin fiber diameter, strength deficiency of the core material 11 can be compensated. For this reason, even if the inside of the outer packaging 12 is depressurized, for example, the fiber material 13 is unlikely to be compressed, and therefore, the heat insulation performance can be improved.

Next, a description is given of an exemplary modification configuration of the fiber material 13. In an exemplary configuration illustrated in Figure 4, the fiber material 13 is formed of a plurality of sheet-like fiber layers. In this case, the fiber material 13 is formed of mixed fiber layers 13C. The mixed fiber layer 13C is a fiber layer obtained by mixing the above thin diameter fiber layer 13A with the thick diameter fiber material. In this case, the heat insulation material 10 is configured to have a plurality of the mixed fiber layers 13C laminated. Such a mixed fiber layer 13C can be obtained by ejecting a solution prepared for forming the thin diameter fiber material and a solution prepared for forming the thick diameter fiber material at the same time from respectively different nozzles included in an electrospinning device not shown. Note that the manufacturing method of the mixed fiber layer 13C is not limited to the above, and various manufacturing method can be adopted.

The mixed fiber layer 13C, which is configured to include the thick diameter fiber material in the thin diameter fiber layer 13A, has higher stiffness and strength than the thin diameter fiber layer 13A alone. Therefore, the mixed fiber layer 13C reinforces the stiffness and strength of the core material 11 by the thick diameter fiber material constituting a part of the mixed fiber layer 13C. Then, the stiffness and strength of the core material 11 being reinforced in this way heightens the stiffness and strength entirely of the heat insulation material 10.

According to the heat insulation material 10, in order to attain improvement in the heat insulation performance, in a configuration mode where the core material 11 is constituted basically by the thin diameter fiber layer 13A, the mixed fiber layer 13C is formed by mixing the thin diameter fiber layer 13A with the thick diameter fiber material. Then, the mixed fiber layer 13C includes the thick diameter fiber material thicker than the thin diameter fiber material to have a function as reinforcing means for reinforcing the strength of the core material 11. Therefore, even in a case where the core material 11 is constituted by the fiber material having a thin fiber diameter, the strength deficiency of the core material 11 can be compensated. For this reason, even if the inside of the outer packaging 12 is depressurized, for example, the fiber material 13 is unlikely to be compressed, and therefore, the heat insulation performance can be improved.

Next, a description is given of an example of a manufacturing method of the heat insulation material 10 described above. Here, two manufacturing methods are described.

### (Manufacturing method of laminated type heat insulation material)

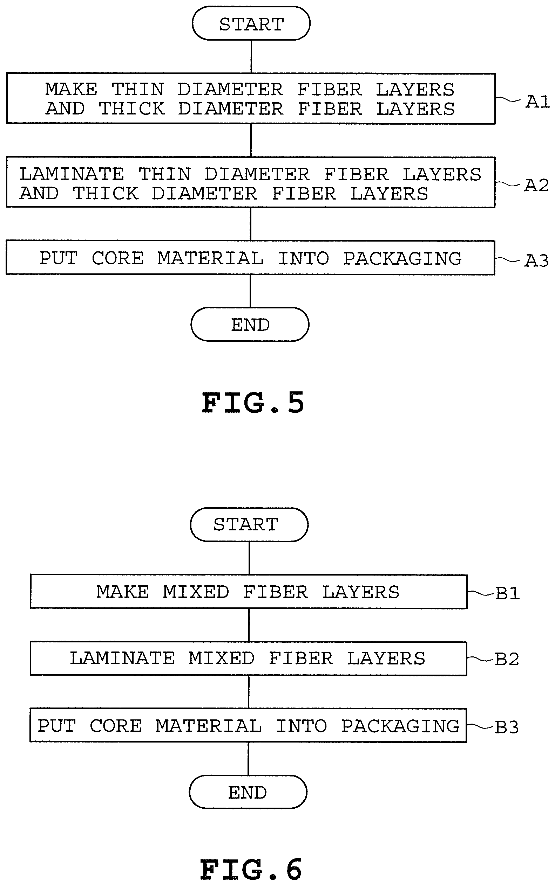

This manufacturing method is an example of a manufacturing method of the laminated type heat insulation material 10 in which the thin diameter fiber layers 13A and the thick diameter fiber layers 13B are laminated. As illustrated in Figure 5, first, a plurality of thin diameter fiber layers 13A and a plurality of thick diameter fiber layers 13B are made by the electrospinning method (A1). Then, the thin diameter fiber layers 13A and the thick diameter fiber layers 13B are alternately laminated (A2). This forms the core material 11 having the thin diameter fiber layers 13A and the thick diameter fiber layers 13B laminated. The core material 11 formed in this way includes the thick diameter fiber material for exerting the function as the reinforcing means. In other words, step A2 is an example of a step of giving reinforcing means to the core material 11. Next, the core material 11 formed in this way is put into the bag-like shaped outer packaging 12 (A3). Then, if the heat insulation material 10 is manufactured as the vacuum heat insulation material, after the core material 11 is put into the outer packaging 12, a vacuumizing step of depressurizing the inside of the relevant outer packaging 12 is performed.

Note that the thin diameter fiber layers 13A and the thick diameter fiber layers 13B may be laminated alternately one by one, or may be laminated alternately by a plurality of layers. The number of laminated layers of the thin diameter fiber layer 13A may be different from the number of laminated layers of the thick diameter fiber layer 13B. In a case where the core material 11 includes a supporting material not shown, on a surface on which the supporting material is laminated, at least one or more layers of the thick diameter fiber layers 13B are first laminated, and then, the thin diameter fiber layer 13A may be laminated on the thick diameter fiber layer 13B. According to this configuration, the thick diameter fiber layer 13B having the function as the reinforcing means is configured to be arranged concentratedly on the supporting material side to allow the supporting material to be strongly reinforced.

### (Manufacturing method of mixed type heat insulation material)

This manufacturing method is an example of a manufacturing method of the mixed type heat insulation material 10 in which the mixed fiber layers 13C are laminated. As illustrated in Figure 6, first, the mixed fiber layers 13C are made by the electrospinning method (B1). Then, a plurality of the mixed fiber layers 13C are laminated (B2). This forms the core material 11 having the mixed fiber layers 13C laminated. The core material 11 formed in this way includes the thick diameter fiber material for exerting the function as the reinforcing means. In other words, step B2 is an example of a step of giving reinforcing means to the core material 11. Next, the core material 11 formed in this way is put into the outer packaging 12 (B3). Then, if the heat insulation material 10 is manufactured as the vacuum heat insulation material, after the core material 11 is put into the outer packaging 12, a vacuumizing step of depressurizing the inside of the relevant outer packaging 12 is performed.

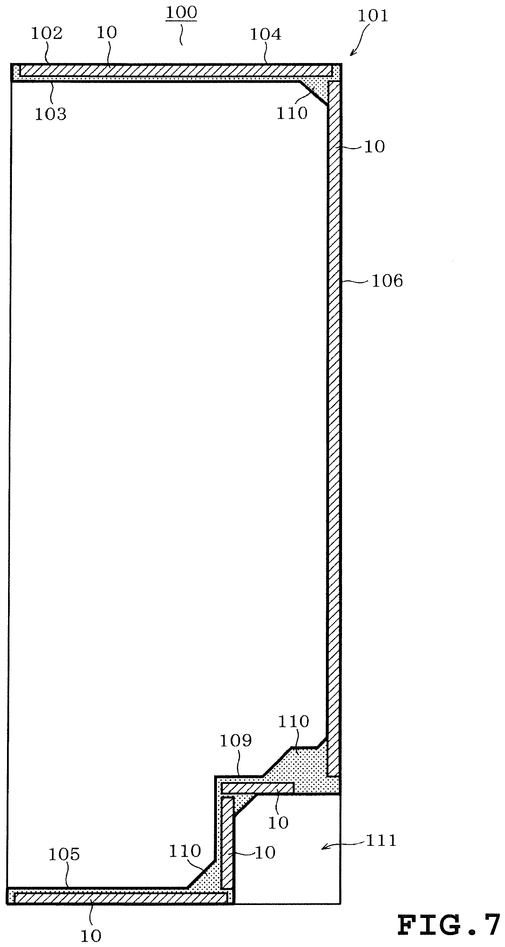

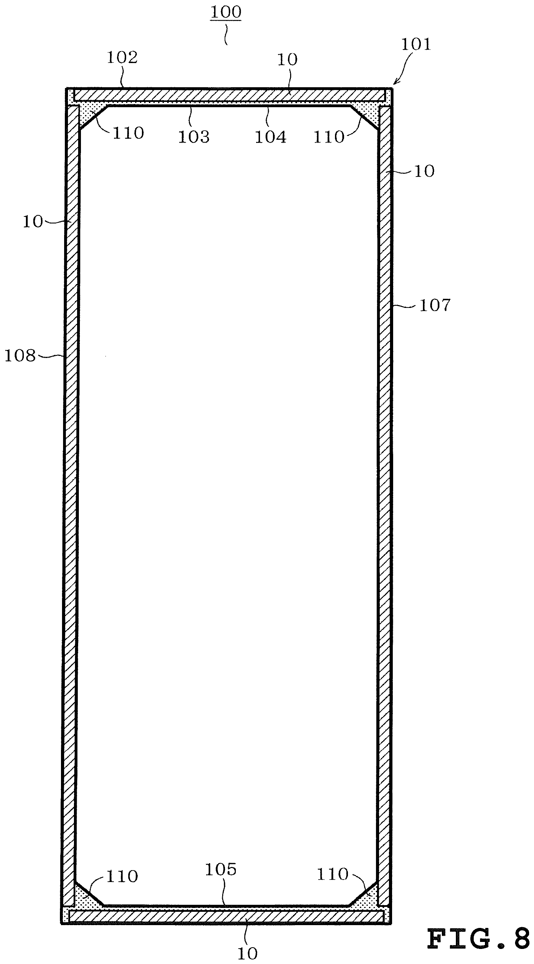

Hereinabove, an example of the configuration of and an example of the manufacturing method of the heat insulation material 10 are described. Next, a description is given of an embodiment in a case where an idea according to the embodiment described above is applied to a refrigerator. In other words, as illustrated in Figure 7 and Figure 8, a main body unit 101 forming an outer shell of a refrigerator 100 is configured to combine an outer plate 102 and an inner plate 103, and includes a ceiling wall part 104, a bottom wall part 105, a back wall part 106, a left wall part 107, a right wall part 108, and a machine chamber wall part 109. The outer plate 102 is made of metal, for example, and the inner plate 103 is made of resin, for example.

The heat insulation material 10 is incorporated in each of the wall parts 104 to 109. In this case, the heat insulation material 10 is a vacuum heat insulation panel of which an inside of the outer packaging 12 is depressurized. Each of the ceiling wall part 104, the bottom wall part 105, and the machine chamber wall part 109 includes, besides the heat insulation material 10, a foam heat insulation material 110 made from foam urethane, for example, between the outer plate 102 and the inner plate 103. On the other hand, each of the back wall part 106, the left wall part 107, and the right wall part 108 includes only the heat insulation material 10 between the outer plate 102 and the inner plate 103. A machine chamber 111 is formed on the rear side of the machine chamber wall part 109, and in the machine chamber 111, a control device not shown controlling general operations of the refrigerator 100, a compressor not shown configuring a refrigeration cycle, and the like are arranged. An inside of the refrigerator 100 is divided into plural storage chambers by dividing walls not shown and each storage chamber has a door not shown attached thereto. This configures the refrigerator 100.

The heat insulation material according to the embodiment includes a core material constituted by a thin diameter fiber material having a fiber diameter of micro order to nano order, and reinforcing means for reinforcing a strength of the core material. According to the embodiment, even in a case where the core material is constituted by the fiber material having a thin fiber diameter, the strength deficiency of the core material can be compensated to improve the heat insulation performance.

Note that the heat insulation material according to the embodiment can be applied to other than the refrigerator. The fiber material may be not the resin fiber material but a glass fiber material. The heat insulation material may not be vacuumized.

### (Second Embodiment)

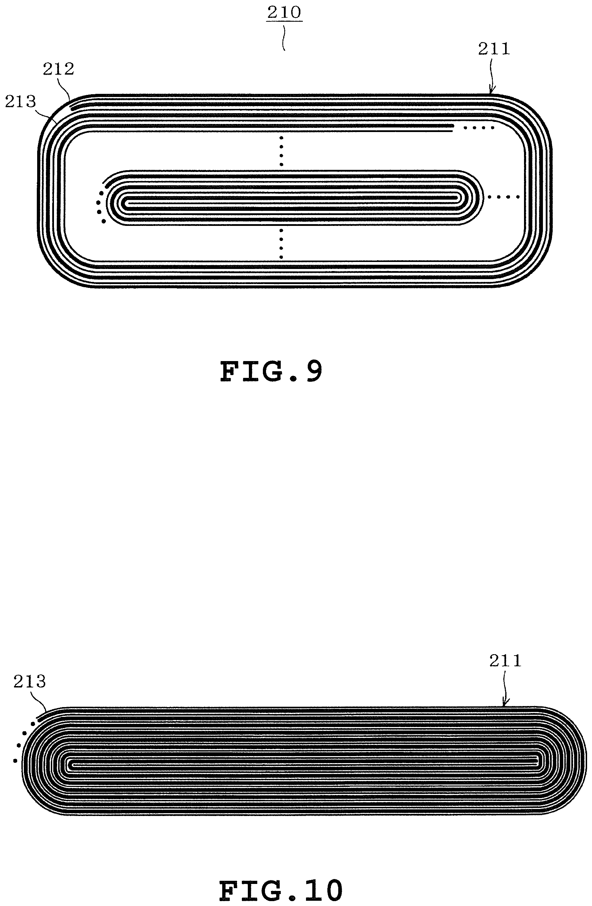

A heat insulation material 210 illustrated in Figure 9 is configured to contain a core material 211 constituting a main portion thereof within an outer packaging 212. As illustrated in Figure 10, the core material 211 is configured by winding a belt-like continuous long non-woven fabric 213. The outer packaging 212 constitutes a surface part of the heat insulation material 210. The outer packaging 212, which is a so-called laminate material made by depositing metal or metal oxide on one layer or two or more layers of resin film, has airtightness with no gas permeability, for example. In this case, the outer packaging 212 is formed into a bag-like shape capable of containing the core material 211. The outer packaging 212 containing the core material 211 is sealed after its inside is depressurized until the inside pressure becomes almost vacuum. This forms the outer packaging 212 containing the core material 211 as the vacuum heat insulation material 210.

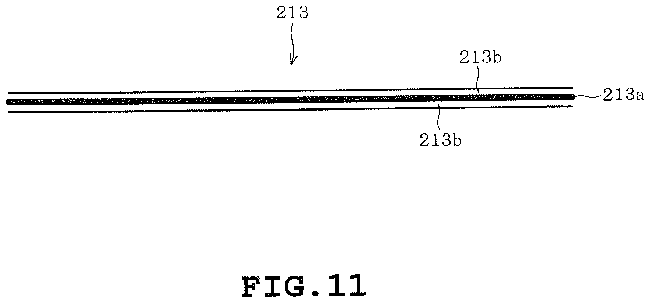

As illustrated in Figure 11, the non-woven fabric 213 is configured to have a first non-woven fabric layer 213a and a second non-woven fabric layer 213b laminated. The first non-woven fabric layer 213a is a sheet-like non-woven fabric layer formed of relatively hard fibers such as felt. The second non-woven fabric layer 213b is a sheet-like non-woven fabric layer formed of resin fibers. In this case, the non-woven fabric 213 is configured to interpose one first non-woven fabric layer 213a between two second non-woven fabric layers 213b. The first non-woven fabric layer 213a is harder than the second non-woven fabric layer 213b and has the stiffness. The non-woven fabric 213 is configured to have the first non-woven fabric layer 213a as a main portion to which the second non-woven fabric layers 213b are added.

The second non-woven fabric layer 213b is formed of resin fibers tangling with each other at random. In this case, the second non-woven fabric layer 213b is made by the electrospinning method. The resin fiber made by made by the electrospinning method is formed into a thin fiber having a fiber diameter of about 0.1 nm to 10 µm and into a long fiber having a length of 1000 or more times its outer diameter, for example. Moreover, the resin fiber made by the electrospinning method has a shape generally not linear but curbed at random in a crimped fashion. Therefore, in the resin fibers, many fibers tangle with each other.

In the case where the resin fiber is made by the electrospinning method, many fibers can be made to tangle with each other, which makes it possible to form a non-woven fabric-like fiber sheet, that is, the second non-woven fabric layer 213b, at the same time as the spinning. Making the resin fiber by the electrospinning method allows the fiber diameter of micro order to nano order to be obtained such that the thickness per one sheet of the second non-woven fabric layer 213b can be made very thin. The heat insulation material 210 has in the core material 211 a configuration of winding such a sheet-like shape second non-woven fabric layer 213b.

Note that if a volume of airspaces among between the fibers tangling each other is made smaller, the number of the airspaces increases to further improve the heat insulation property. Therefore, the fiber diameter of the resin fiber is preferably equal to or less than about 5 µm, and further preferably equal to or less than 1 µm, that is, a fiber diameter of the nano order. Then, an airspace ratio of the second non-woven fabric layer 213b is preferably kept to be at least 60 to 90 %. This allows the heat insulation property to be maintained and can attain improvement in the strength. A thermal conductivity of a heat insulation panel formed of the resin fiber is preferably 2.2 mW/mK or less, and further preferably 1.1 mW/mK or less.

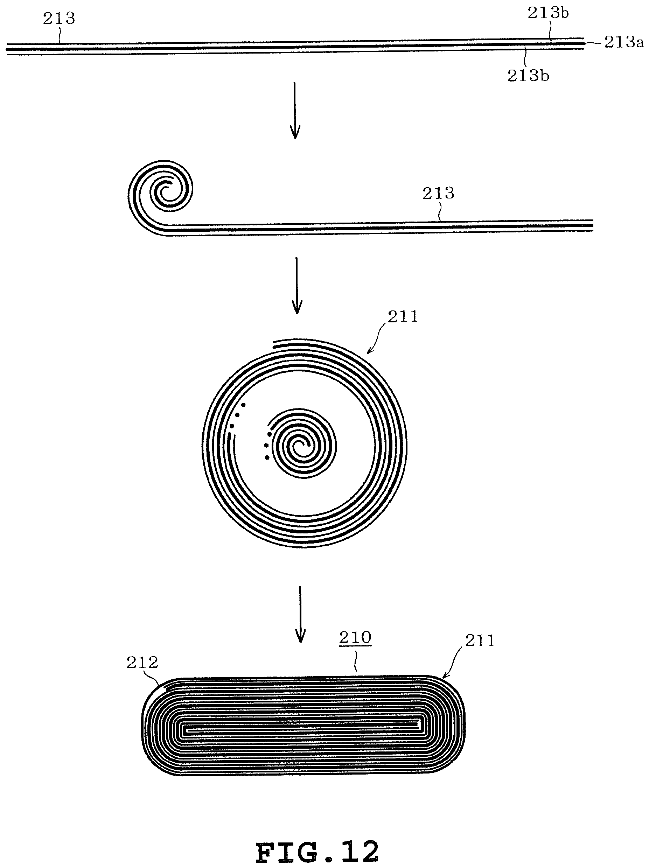

Next, a description is given of an example of a manufacturing method of the heat insulation material 210 described above. That is, as illustrated in Figure 12, the belt-like long non-woven fabric 213 including the first non-woven fabric layer 213a and the second non-woven fabric layer 213b is formed. Then, the non-woven fabric 213 is wound from its end to form the core material 211. At this time, the non-woven fabric 213 is preferably wound at least 100 turns or more, and further preferably several hundreds of turns or more, or several thousands of turns or more. This allows the core material 211 having at least 100 layers or more of the non-woven fabric 213 to be obtained, attaining improvement in the heat insulation performance.

Then, the core material 211 obtained by winding the non-woven fabric 213 is put into the outer packaging 212. At this time, the non-woven fabric 213 has its main portion constituted by the first non-woven fabric layer 213a which has a certain level of stiffness. For this reason, the wound non-woven fabric 213 has a certain level of spring property, that is, a property to return back a cylindrical shape. Therefore, the wound non-woven fabric 213 is not flatly crumpled by its own weight, and maintains a state of defining a hollow at a center.

Then, the inside of the outer packaging 212 containing the core material 211 is vacuumized. This allows the flat heat insulation material 210 with the core material 211 being compressed to be obtained. At this time, as described above, the non-woven fabric 213 constituting the core material 211 has a certain level of spring property. For this reason, the vacuumization of the inside of the outer packaging 212 is proceeded against the spring property of the non-woven fabric 213. Therefore, the non-woven fabric 213 can be prevented from being excessively compressed, and thus, the second non-woven fabric layer 213b can be prevented from being excessively compressed to degrade the airspace ratio.

According to the heat insulation material 210 in the embodiment, the core material is formed by winding the belt-like continuous long non-woven fabric 213 in a continuous state without being cut. Then, the non-woven fabric 213 wound in this way includes the resin fiber. In other words, according to the heat insulation material 210, the core material 211 is formed by winding the non-woven fabric 213. For this reason, it is possible to attain improvement in the productivity, differently from a configuration in which numerous non-woven fabrics are laminated. The core material 211 formed by winding the non-woven fabric 213 has a certain level of spring property. Therefore, it is possible to suppress degradation of the heat insulation performance due to the excessive compression of the non-woven fabric 213.

According to the heat insulation material 210, the core material 211 is formed by winding the non-woven fabric 213 100 turns or more, that is, by forming 100 layers or more, to attain further improvement in the heat insulation performance. Moreover, according to the heat insulation material 210, the resin fiber forming the non-woven fabric 213 is made by the electrospinning method. Therefore, the non-woven fabric 213 having the extremely high heat insulation performance can be achieved, and thus, it is possible to attain further improvement in the heat insulation performance of the heat insulation material 210.

According to the heat insulation material 210, the heat insulation panel is constituted by the resin fiber forming the non-woven fabric 213, and if the thermal conductivity is 2.2 mW/mK or less, it is possible to attain further improvement in the heat insulation performance.

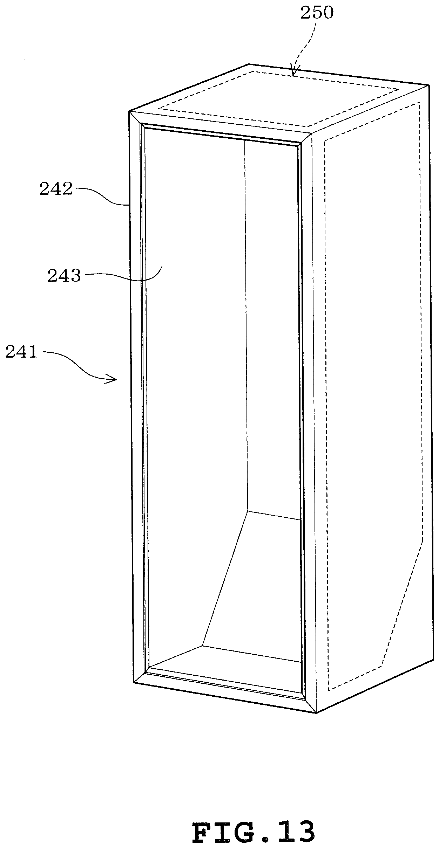

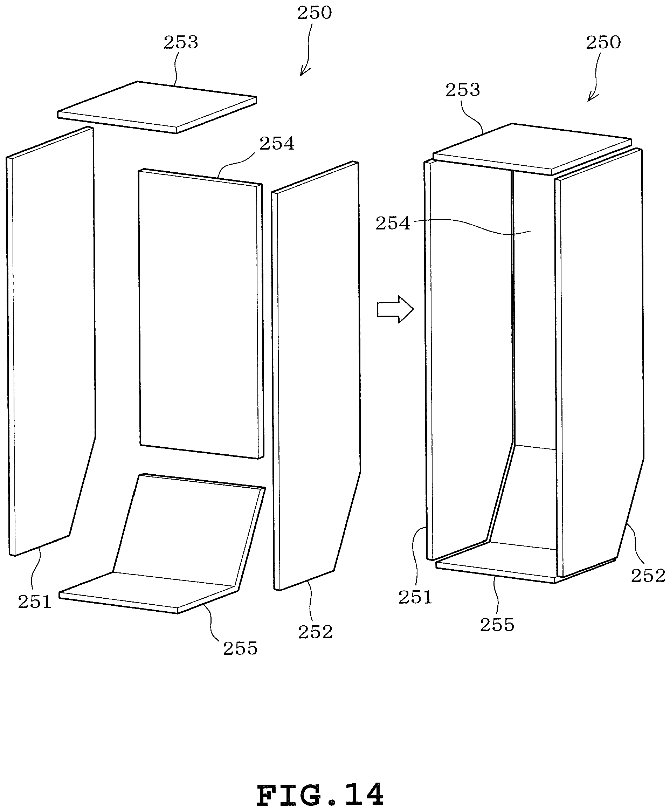

Next, a description is given of a refrigerator using the above heat insulation material 210 on the basis of on Figure 13 and Figure 14.

The refrigerator includes a heat insulation box 241 a front face of which is open as shown in Figure 13. The refrigerator has a refrigeration cycle not shown attached to the heat insulation box 241. The refrigerator also includes dividers not shown dividing the heat insulation box 241 into a plurality of storage chambers, a heat insulation door not shown covering a front face of the storage chamber, a drawer not shown moving back and forth in the storage chamber, and the like. The heat insulation box 241 of the refrigerator has an outer box 242, an inner box 243, and a vacuum heat insulation panel assembly 250 interposed between these outer box 242 and inner box 243. The outer box 242 is formed of a steel plate, and the inner box 243 is made from synthetic resin.

The vacuum heat insulation panel assembly 250 is divided corresponding to wall parts of the heat insulation box 241 of the refrigerator. Concretely, the vacuum heat insulation panel assembly 250 is divided into a left wall panel 251, a right wall panel 252, a ceiling panel 253, a rear wall panel 254, and a bottom wall panel 255 as shown in Figure 14. Any of these left wall panel 251, right wall panel 252, ceiling panel 253, rear wall panel 254, and bottom wall panel 255 is formed of the above heat insulation material 210. The left wall panel 251, the right wall panel 252, the ceiling panel 253, the rear wall panel 254, and the bottom wall panel 255 are assembled as the vacuum heat insulation panel assembly 250, and incorporated between the outer box 242 and the inner box 243. Gaps among the left wall panel 251, the right wall panel 252, the ceiling panel 253, the rear wall panel 254, and the bottom wall panel 255 constituting the vacuum heat insulation panel assembly 250 between the outer box 242 and the inner box 243 are sealed by heat insulating sealing members not shown. The sealing member is made from foamable resin or the like, for example.

In this way, the refrigerator has the vacuum heat insulation panel assembly 250 constituting the heat insulation box 241. The vacuum heat insulation panel assembly 250 is formed of the above heat insulation material 210. Therefore, the higher heat insulation performance can be ensured while further reducing the thickness and the weight.

The heat insulation material according to the embodiment includes the core material formed by winding the belt-like continuous non-woven fabric in a continuous state. The non-woven fabric is formed of a resin fiber. According to the embodiment, as compared to the configuration in which numerous non-woven fabrics are laminated, it is possible to attain improvement in the productivity and suppress degradation of the heat insulation performance.

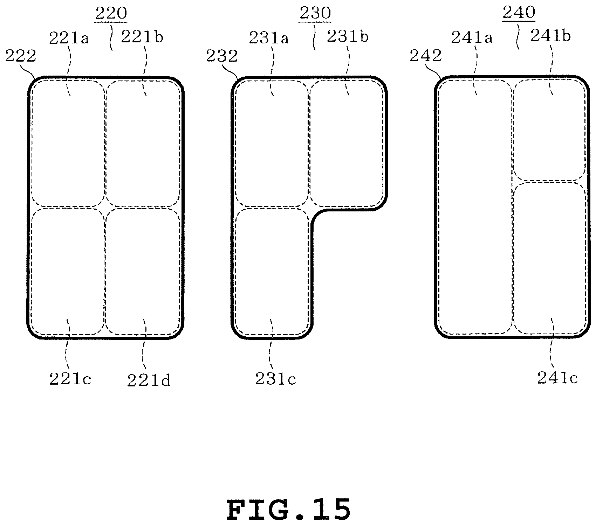

Note that the heat insulation material may be configured to include a plurality of core materials. A heat insulation material 220 illustrated in Figure 15 is configured to include four core materials 221a to 221d having the same shape and size in one outer bag material 222. Any of these core materials 221a to 221d has the same configuration as the core material 211 described above. In this way, including even numbers of core materials in one outer bag material 222 allows the rectangular heat insulation material 220 generally formed into one body to be obtained.

A heat insulation material 230 illustrated in Figure 15 is configured to include three core materials 231a to 231c having the same shape and size in one outer bag material 232. Any of these core materials 231a to 231d has the same configuration as the core material 211 described above. In this way, including odd numbers of core materials in one outer bag material 232 allows a general shape of the heat insulation material 230 to be other than a rectangular shape. Therefore, the general shape of the heat insulation material can be adequately changed in conformity to a shape of a region that the heat insulation material is attached, for example.

A heat insulation material 240 illustrated in Figure 15 is configured to include a plurality of the core materials 241a to 241c having the different shapes and sizes. Any of these core materials 241a to 241c has the same configuration as the core material 211 described above. Here, the core material according to the embodiment has the spring property as described above, and there is a tendency that the larger the core material, the smaller a strength of the spring property, and the smaller the core material, the larger the strength. In other words, the larger the core material, the more likely to crump, and the smaller the core material, the more unlikely to crump. For this reason, according to the heat insulation material 240, a tendency unlikely to crump or likely to crump is different depending on the regions that the core materials 241a to 241c are arranged, and therefore, a compressibility can be differentiated for each region in vacuumizing. Therefore, a thickness of the heat insulation material 240 can be differentiated depending on the region.

The heat insulation material according to the embodiment can be applied to other than the refrigerator. The fiber forming the non-woven fabric may not be the resin fiber, but the glass fiber. The heat insulation material may not be vacuumized.

### (Third Embodiment)

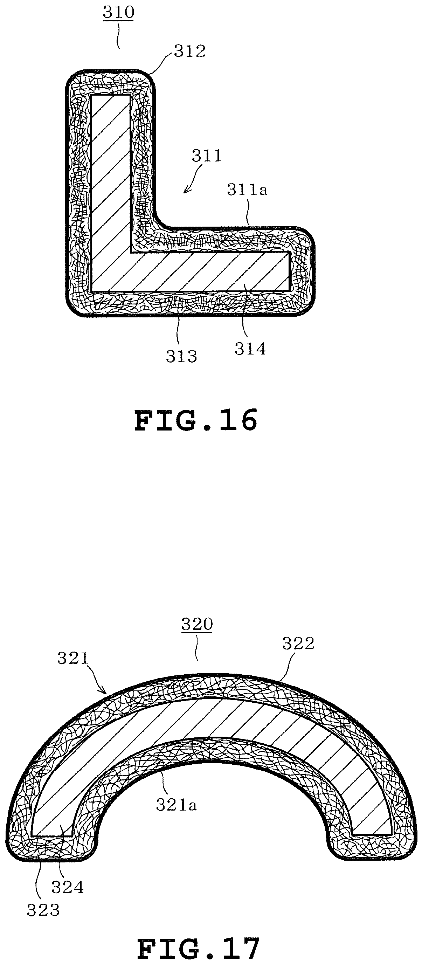

A heat insulation material 310 illustrated in Figure 16 is configured to contain a core material 311 constituting a main portion thereof within an outer packaging 312. The core material 311 includes a resin 313 and a supporting material 314. The core material 311 has a heat insulation surface 311a. The heat insulation surface 311a is a surface portion facing an object to which the heat insulation material 310 is attached, that is, an inside or outside of the refrigerator, for example, and is the surface portion exerting the heat insulation function between the inside and outside the object that the heat insulation material 310 is attached. A heat insulation material 320 illustrated in Figure 17 is configured to contain a core material 321 constituting a main portion thereof within an outer packaging 322. The core material 321 includes a fiber 323 and a supporting material 324. The core material 321 has a heat insulation surface 321a. The heat insulation surface 321a is a surface portion facing an inside or outside of an object to which the heat insulation material 320 is attached, and is the surface portion exerting the heat insulation function between the inside and outside of the object that the material 320 is attached. The outer packaging 312 or 322 constitutes the surface part of the heat insulation material 310 or 320, respectively. The outer packaging 312 or 322, which is a so-called laminate material made by depositing metal or metal oxide on one layer or two or more layers of resin film, has airtightness with no gas permeability, for example. In this case, the outer packaging 312 or 322 is formed into a bag-like shape capable of containing the core material 311 or 321, respectively.

The outer packaging 312 or 322 containing the core material 311 or 321 is sealed after its inside is depressurized until the inside pressure becomes almost vacuum. This forms the outer packaging 312 or 322 containing the core material 311 or 321 as the vacuum heat insulation material 310 or 320, respectively. In the heat insulation material 310 or 320 configured in this way, the supporting material 314 or 324 is covered by the fiber 313 or 323, respectively. In the heat insulation material 310 or 320, the fiber 313 or 323 is interposed between the outer packaging 312 and the supporting material 314, or between the outer packaging 322 and the supporting material 324, respectively. Therefore, the supporting material 314 or 324 is not in contact with an inner surface of the outer packaging 312 or 322, respectively.

The fiber 313 or 323 is formed of resin fiber materials tangling each other at random. In this case, the fiber 313 or 323 is made by the electrospinning method. The fiber 313 or 323 made by the electrospinning method is formed into a thin fiber having a fiber diameter of about 0.1 nm to 10 µm and into a long fiber having a length of 1000 or more times its outer diameter, for example. Moreover, the fiber 313 or 323 made by the electrospinning method has a shape generally not linear but curbed at random in a crimped fashion. Therefore, many fibers tangle with each other. The fiber 313 or 323 being configured to have numerous airspaces can also attain the weight reduction.

The supporting material 314, which is made of an acrylic-based resin material, for example, has a strength resistible to vacuum and has a function to maintain a shape of the core material 311 of the heat insulation material 310. The supporting material 314 is configured to have numerous airspaces, and configured to have the heat insulation property. In this case, the supporting material 314 is shaped in such a manner that pieces of two rectangles are coupled at ends of the respective pieces, and thus, has an L-shaped section.

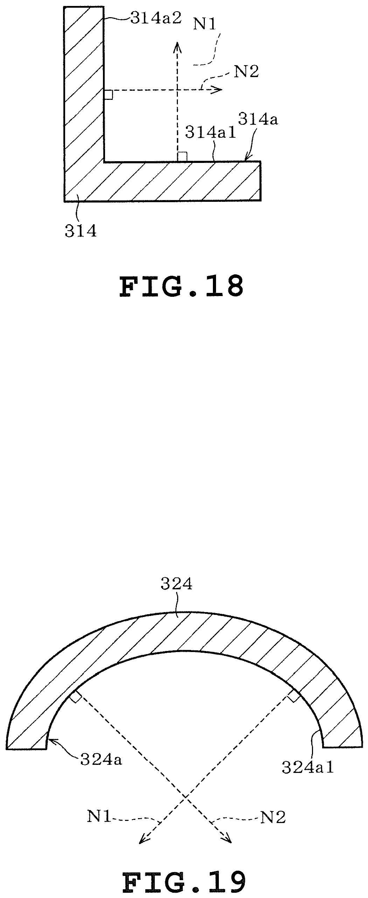

As illustrated in Figure 18, the supporting material 314 has a heat insulation surface corresponding part 314a corresponding to the heat insulation surface 311a formed onto the core material 311. The heat insulation surface corresponding part 314a internally faces via the fiber 313 the heat insulation surface 311a of the core material 311. Then, the supporting material 314 has a shape that normal line directions at at least two positions on the heat insulation surface corresponding part 314a intersect each other. In this case, the heat insulation surface corresponding part 314a includes two surface portions 314a1 and 314a2. In this case, two surface portions 314a1 and 314a2 are coupled perpendicularly to each other to form one L-shaped heat insulation surface corresponding part 314a. Then, the heat insulation surface 311a which the heat insulation surface corresponding part 314a faces is formed into an L-shape. The heat insulation surface corresponding part 314a has a configuration in which a normal line direction N1 of one surface portion 314a1 and a normal line direction N2 of the other surface portion 314a2 intersect each other.

On the other hand, the supporting material 324, which is made of an acrylic-based resin material, for example, has a strength resistible to vacuum and has a function to maintain a shape of the core material 321 of the heat insulation material 320. The supporting material 324 is configured to have numerous airspaces, and configured to have the heat insulation property. In this case, the supporting material 324 has an arc-like section.

As illustrated in Figure 19, the supporting material 324 has a heat insulation surface corresponding part 324a corresponding to the heat insulation surface 321a formed onto the core material 321. The heat insulation surface corresponding part 324a internally faces via the fiber 323 the heat insulation surface 321a of the core material 321. Then, the supporting material 324 has a shape that normal line directions at at least two positions on the heat insulation surface corresponding part 324a intersect each other. In this case, the heat insulation surface corresponding part 324a has a curved surface 324a1. Then, the heat insulation surface corresponding part 324a has a configuration in which normal line directions N1 and N2 at at least two positions on the curved surface 324a1 intersect each other.

Corners of the supporting material 314 or 324 are rounded. For this reason, when the supporting material 314 or 324 is put into the outer packaging 312 or 322, or the inside of the outer packaging 312 or 322 containing the supporting material 314 or 324 is depressurized, for example, stresses are prevented from concentrating on portions of the outer packaging 312 or 322 facing the corners of the supporting material 314 or 324, respectively. Therefore, the outer packaging 312 or 322 can be prevented from being broken or damaged. The outer packaging 312 or 322 can be prevented from being broken or damaged also by covering portions around the corners of the supporting material 314 or 324 in the outer packaging 312 or 322 with more fibers 313 or 323.

According to the heat insulation material 310 or 320 in the embodiment, the supporting material 314 or 324 constituting a part of the core material 311 or 321 and maintaining the shape of the relevant core material 311 or 321 respectively has the shape that the normal line directions at at least two positions on the heat insulation surface corresponding part 314a or 324a corresponding to the heat insulation surface 311a or 321a intersect each other. In other words, the supporting material 314 or 324 has not a planar shape but a three-dimensional shape. According to this configuration, since the supporting material 314 or 324 having the three-dimensional shape supports the shape of the core material 311 or 321, respectively, general shape of the heat insulation material 310 or 320 can be maintained to be three-dimensional shaped. Therefore, the general shape of the heat insulation material 310 or 320 can be freely designed depending on an object that the heat insulation material 310 or 320 is attached by adequately designing the shape of the supporting material 314 or 324, respectively.

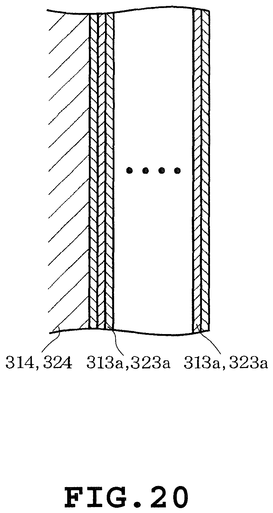

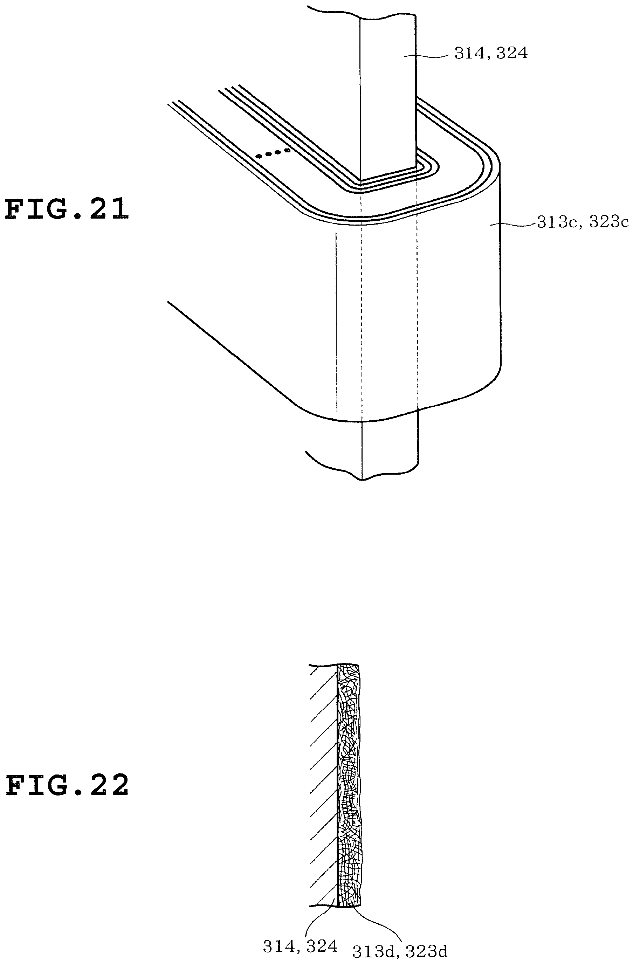

Next, a description is given of a concrete exemplary configuration of the fiber 313 or 323 in the heat insulation material 310 or 320 described above. The heat insulation material 310 or 320 illustrated in Figure 20 has a configuration in which the fiber 313 or 323 forms a plurality of fiber sheets 313a or 323a, and a plurality of fiber sheets 313a or 323a are laminated around the supporting material 314 or 324. At this time, the number of laminated layers of the fiber sheets 313a or 323a may be at least several hundreds or more, or several thousands or more. The heat insulation material 310 or 320 illustrated in Figure 21 has a configuration in which the fiber 313 or 323 forms a long fiber sheet 313c or 323c, and the fiber sheet 313c or 323c is wound around the supporting material 314 or 324, respectively. At this time, the fiber sheet 313c or 323c may be wound at least 100 turns or more. The heat insulation material 310 or 320 illustrated in Figure 22 is configured to include the fiber 313 or 323 as a fiber film 313d or 323d that is formed into a film directly on the supporting material 314 or 324. At this time, a film thickness of the fiber film 313d may be a thickness corresponding to 100 sheets of the fiber sheet 313a or 323a, or 100 turns of the fiber sheet 313c or 323c. In this way, the concrete configuration of the fiber 313 or 323 can adopt various configurations. In short, various configurations can be adopted so long as the supporting material 314 or 324 is overall or partly covered with the fiber 313 or 323.

Next, a description is given of an example of a manufacturing method of the heat insulation material 310 or 320 described above. Here, two manufacturing methods are described.

### (Manufacturing method of a type of putting-in step -> covering step)

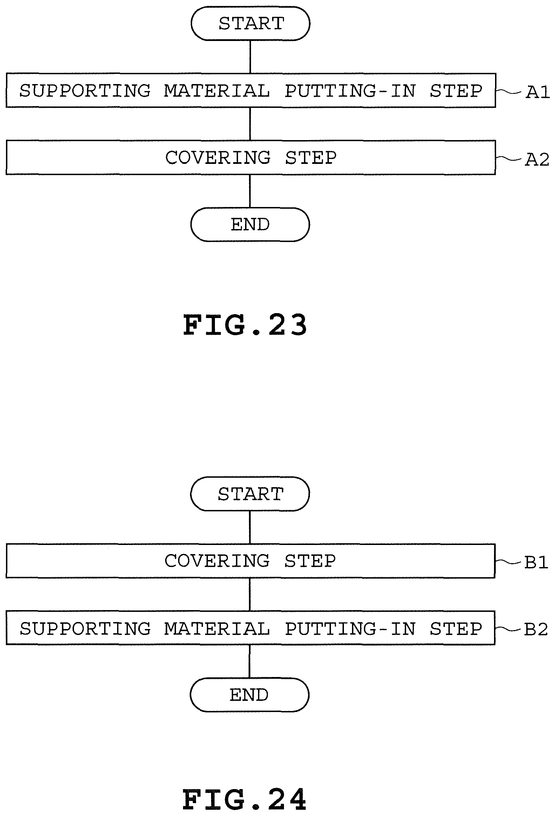

As illustrated in Figure 23, in this manufacturing method, first, the supporting material 314 or 324 is put into the outer packaging 312 or 322 (A1). Then, after the supporting material putting-in step, the supporting material 314 or 324 put into the outer packaging 312 or 322 is covered with the fiber 313 or 323 (A2). In other words, in this manufacturing method, the core material 311 or 321 is formed within the outer packaging 312 or 322. In this case, it is difficult to wind the fiber sheet 313c or 323c around and form the fiber film 313d or 323d directly on the supporting material 314 or 324 put into the outer packaging 312 or 322.

For this reason, in the covering step, it is preferable to laminate a plurality of the fiber sheets 313a or 323a in a gap between the outer packaging 312 and the supporting material 314, or between the outer packaging 322 and the supporting material 324, respectively, to cover the supporting material 314 or 324 with the fiber 313 or 323. Note that the fiber sheet 313a or 323a may be put into the outer packaging 312 or 322 one by one, or two or more sheets may be simultaneously put into. If the heat insulation material 310 or 320 is manufactured as the vacuum heat insulation material, after the covering step, a vacuumizing step of vacuumizing the inside of the outer packaging 312 or 322 is performed.

### (Manufacturing method of a type of covering step -> putting-in step)

As illustrated in Figure 24, in this manufacturing method, first, the supporting material 314 or 324 is covered with the fiber 313 or 323 (B1). Then, after the covering step, the supporting material 314 or 324 covered with the fiber 313 or 323, that is, the core material 311 or 321, is put into the outer packaging 312 or 322 (B2). In other words, in this manufacturing method, the core material 311 or 321 is formed outside the outer packaging 312 or 322, and thereafter, the core material 311 or 321 is put into the outer packaging 312 or 322, respectively. In this case, it is easy to wind the fiber sheet 313c or 323c around and form the fiber film 313d or 323d directly on the supporting material 314 or 324 not yet put into the outer packaging 312 or 322.

For this reason, in the covering step, it is possible to adopt a technique of winding the fiber sheet 313c or 323c around the supporting material 314 or 324, or a technique of forming the fiber film 313d or 323d directly on the supporting material 314 or 324. It is also possible to laminate the fiber sheet 313a or 323a on the supporting material 314 or 324. Therefore, a technique of laminating the fiber sheet 313a or 323a on the supporting material 314 or 324 can be combined with the technique of winding the fiber sheet 313c or 323c around the supporting material 314 or 324, or the technique of forming the fiber film 313d or 323d directly on the supporting material 314 and 324, or both of the techniques. If the heat insulation material 310 or 320 is manufactured as the vacuum heat insulation material, after the supporting material putting-in step, a vacuumizing step of vacuumizing the inside of the outer packaging 312 or 322 is performed.

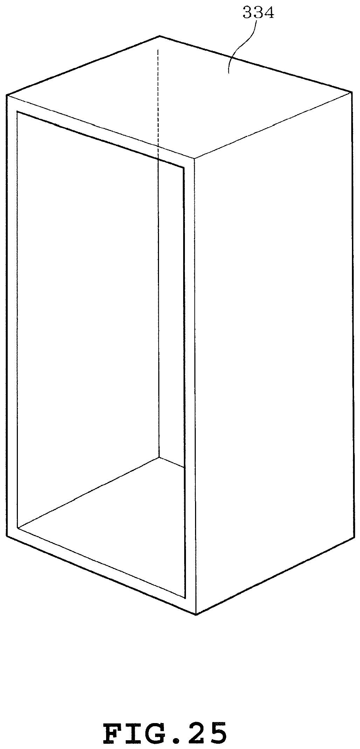

Hereinabove, an example of the configuration of and an example of the manufacturing method of the heat insulation material 310 or 320 are described. Next, a description is given of an embodiment in a case where an idea according to the embodiment described above is applied to a refrigerator. That is, as illustrated in Figure 25, a supporting material 334 for a refrigerator is shaped into a substantially rectangular parallelepipedic case with one face being open. The supporting material 334 is not configured by assembling a plurality of plate-shaped heat insulation materials, but is formed as one non-separable component.

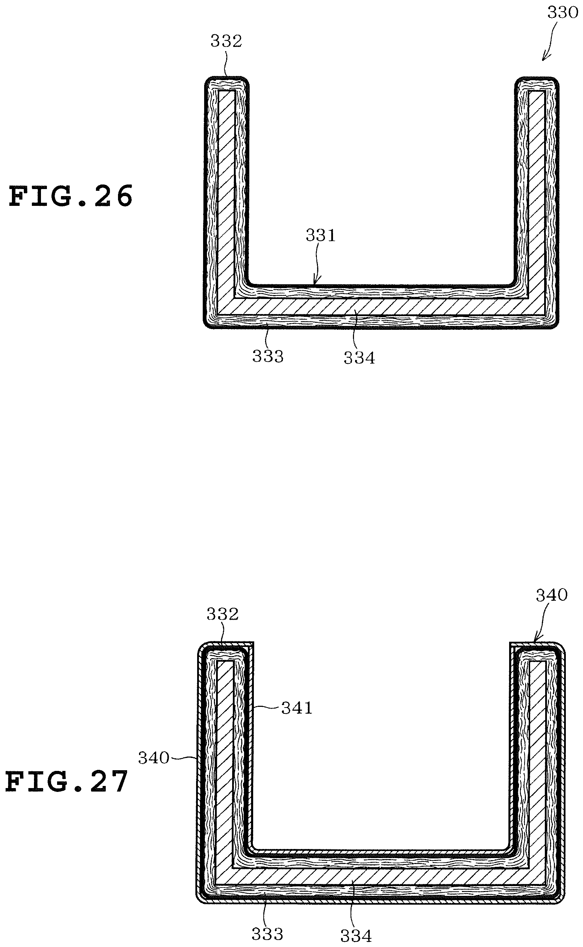

As illustrated in Figure 26, a core material 331 constituted by a fiber 333 and the supporting material 334 is put into or formed in the bag-like shaped outer packaging 332, and the packaging 332, after its inside is depressurized until the inside pressure becomes almost vacuum, is sealed. By doing so, the heat insulation material 330 is formed which is shaped into a substantially rectangular parallelepipedic case with one face being open. Then, as illustrated in Figure 27, an outer plate 340 made of metal, for example, is attached to an outside of the heat insulation material 330, and an inner plate 341 made of resin, for example, is attached to an inside of the heat insulation material 330. This forms a heat insulation box 343 forming a main body unit of a refrigerator. Then, a divider or door not shown is attached to the heat insulation box 343 to produce a refrigerator. According this refrigerator, the heat insulation material 330 is not configured by assembling a plurality of heat insulation panels, but the heat insulation material 330 is formed as one non-separable component. Therefore, heat leakage is unlikely to occur, obtaining a refrigerator excellent in the heat insulation performance.

Note that, here, the exemplary configuration is described in which the heat insulation material 330 is formed as one non-separable component to collectively perform heat insulation on the entire heat insulation box 343. However, the refrigerator according to the embodiment may be configured to partially use the three-dimensionally shaped heat insulation material. In other words, for example, corners of the refrigerator, portions around a machine chamber not shown, and the like are configured complexly to have a three-dimensional shape. Therefore, for a region having such a complex shape, a three-dimensionally shaped heat insulation material may be individually formed in conformity of that shape, and thereby, the heat insulation may be performed. The vacuum heat insulation panel of related art was easy to form into a planar-shape, but difficult to process into a three-dimensional shape. Therefore, it was difficult to perform heat insulation on a three-dimensionally shaped region by use of the planar-shaped vacuum heat insulation panel of related art. According to the embodiment, even for a region having a three-dimensional complex shape, the heat insulation material in conformity to that shape can be provided. Moreover, using the heat insulation material according to the embodiment can attain the weight reduction.

The heat insulation material according to the embodiment includes the core material constituted by the fiber, and the supporting material maintaining the shape of the core material, the supporting material constituting the core material. The supporting material has the heat insulation surface corresponding part corresponding to the heat insulation surface of the core material, and has a shape that the normal line directions at at least two positions on the heat insulation surface corresponding part intersect each other. The manufacturing method of the heat insulation material according to the embodiment is the method of manufacturing the heat insulation material including the core material constituted by the fiber, and includes the supporting material putting-in step of putting the supporting material constituting the core material into the outer packaging. The supporting material maintains the shape of the supporting material, has the heat insulation surface corresponding part corresponding to the heat insulation surface of the core material, and has a shape that the normal line directions at at least two positions on the heat insulation surface corresponding part intersect each other. According to the embodiment, the shape of the core material can be maintained by the supporting material having a three-dimensional shape, and therefore, the general shape of the heat insulation material can be freely designed by use of the supporting material having a desired shape.

According to the refrigerator in the embodiment, the heat insulation material formed as one non-separable component is used. Therefore, the refrigerator excellently high in the heat insulation performance can be provided.

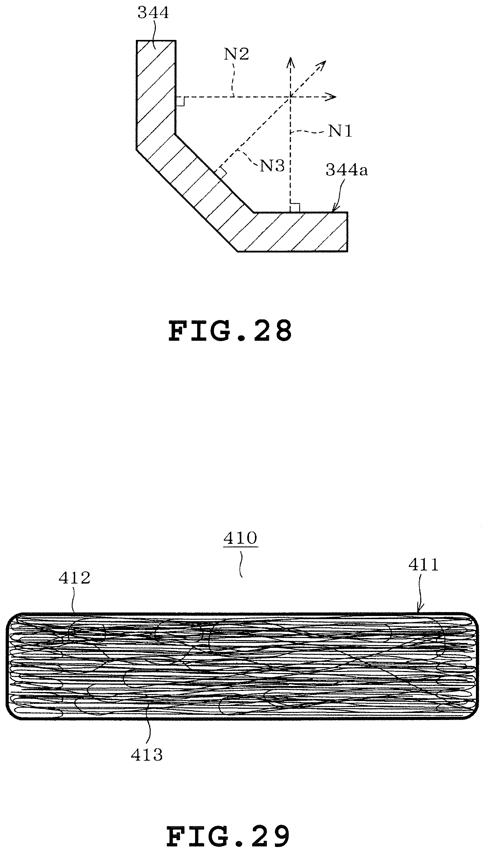

Note that the shape of the supporting material can be adequately changed and implemented. For example, the supporting material 344 illustrated in Figure 28 has a shape that normal line directions N1, N2, and N3 at at least three positions on the heat insulation surface corresponding part 344a intersect each other. The embodiment can adopt the supporting material having a three-dimensionally complex shape, besides the above.

A quality of material for the supporting material can be adequately changed and implemented. The supporting material may be configured to be solid with no airspace. The heat insulation material according to the embodiment can be applied also to other than the refrigerator, such as a hot-water container, a building material, and a heat retaining kettle, for example. The fiber may not be the resin fiber, but the glass fiber. The heat insulation material may not be vacuumized.

### (Fourth Embodiment)

A heat insulation material 410 illustrated in Figure 29 is configured to contain a core material 411 constituting a main portion thereof within an outer packaging 412. The core material 411 includes a fiber 413. The outer packaging 412 constitutes a surface part of the heat insulation material 410. The outer packaging 412, which is a so-called laminate material made by depositing metal or metal oxide on one layer or two or more layers of resin film, has airtightness with no gas permeability, for example. In this case, the outer packaging 412 is formed into a bag-like shape capable of containing the core material 411. The outer packaging 412 containing the core material 411 is sealed after its inside is depressurized until the inside pressure becomes almost vacuum. This forms the outer packaging 412 containing the core material 411 as the vacuum heat insulation material 410.

The fiber 413 is formed of inorganic fibers tangling each other at random. In this case, the fiber 413 is made by the electrospinning method. The fiber 413 made by the electrospinning method is formed into a thin fiber having an average fiber diameter of 1 µm or less and into a long fiber having a length of 1000 or more times its outer diameter, for example. Moreover, the fiber 413 made by the electrospinning method has a shape generally not linear but curbed at random in a crimped fashion. This allows each fiber 413 to be configured to have at least one point where the fiber contacts itself. Therefore, many fibers tangle with each other.

In this case, the fiber 413 is made from inorganic system material such as silicon dioxide (SiO₂), titanium dioxide (TiO₂), zirconium dioxide (ZrO>₂) , and aluminum oxide (Al₂O₃). The fiber 413 can be formed of one kind of material or formed by spinning two or more kinds of materials selected from such inorganic system materials.

In the case where the fiber 413 is made by the electrospinning method, many fibers can be made to tangle with each other, which makes it possible to form a non-woven fabric-like fiber sheet at the same time as the spinning. Making the fiber 413 by the electrospinning method allows the average fiber diameter of micro order to nano order, at least 1 µm or less in this case, to be obtained such that the thickness per one sheet of the fiber sheet can be made very thin. The core material 411 of the heat insulation material 410 may be formed by laminating many sheets of the fiber layer each of which is formed into the non-woven fabric-like fiber sheet in this way.

Note that if a volume of airspaces among between the fibers tangling each other is made smaller, the number of the airspaces increases to further improve the heat insulation property. Therefore, the average fiber diameter of the fiber 413 is preferably equal to or less than 1 µm, that is, a fiber diameter of the nano order. If the average fiber diameter of the fiber 413 is less than 60 nm, the strength or stiffness of the fiber 413 itself decreases, leading to decrease in the strength or stiffness of the core material, and thus, of the entire heat insulation material 410. In the case where the core material 411 is configured by laminating many sheets of the non-woven fabric-like fiber sheet which is formed of the fiber 413, if the average fiber diameter of the fiber 413 is less than 60 nm, a thickness per one fiber sheet is excessively thin, possibly leading to degradation of the heat insulation performance. Therefore, the average fiber of the diameter the fiber 413 is not so good as it is smaller, and is preferably at least 60 nm or more.

To the fiber 413, various inorganic fillers may be added such as metal hydroxide, carbonate, hydrosulfate, and silicate, for example. Adding the inorganic filler to the fiber 413 allows the heat insulation property to be maintained and can attain improvement in the strength thereof. As the added inorganic filler, wollastonite, potassium titanate, xonotlite, gypsum fibers, aluminum port rate, MOS (basic magnesium sulfate), aramid fibers, carbon fibers, glass fibers, talc, mica, and glass flakes can be considered.

According to the heat insulation material 410 in the embodiment, the core material 411 constituted by the fiber 413 made of an inorganic material is included. The fiber 413 is a long fiber having at least one point C where the fiber contacts itself, and is a fine fiber with the average fiber diameter of the fiber 413 being 1 µm or less. In other words, in the heat insulation material 410 according to the embodiment, the average fiber diameter of the fiber 413 is smaller as compared to the related art. According to this configuration, even if different fibers contact each other or the same fiber contacts itself, the contact area is small to be able to suppress increase in the thermal contact resistance. Therefore, concerning the heat insulation material 410 formed of the fiber 413 which is made of the inorganic material, it is possible to attain improvement in the heat insulation performance thereof.

According to the heat insulation material 410 in the embodiment, the average fiber diameter of the fiber 413 is 60 nm or more. Therefore, the strength or stiffness of the fiber 413 itself can be prevented from decreasing, which can suppress the strength or stiffness of the core material, and thus, of the entire heat insulation material 410. In the case where the core material 411 is configured by laminating the non-woven fabric-like fiber sheets formed of the fiber 413, the heat insulation performance per one fiber sheet can be prevented from degrading. For this reason, even if the number of laminated layers of the fiber sheet used for one heat insulation material 410 is not increased, a desired heat insulation performance can be obtained, which is advantageous in the productivity or a cost.

According to the heat insulation material 410 in the embodiment, an inorganic system material is used as a material for the fiber 413. The fiber 413 made from the inorganic system material in this way has a heat resistance property. For this reason, a solvent of an inorganic material used in the electrospinning method, for example, a solvent containing water, acid, alcohol and the like, can be removed by way of high-temperature drying after the fiber 413 is formed. Therefore, it can be prevented that the solvent remains in the heat insulation material 410, or the vacuum degree in the heat insulation material 410 decreases.

According to the heat insulation material 410 in the embodiment, each fiber 413 has at least one point C where the fiber contacts itself. In other words, the fiber 413, which is long in a fiber length of one fiber, differently from a short fiber such as a short glass fiber of related art, has the point where the fiber contacts itself. Then, at such a point where the fiber contacts itself, a region where the fiber 413 is curved is formed. That is, the fiber 413 is shaped to be partially rounded. Therefore, even if fine powders of the fiber 413 are dispersed, for example, when the heat insulation material 410 is manufactured or scrapped, there is no harmful effect unlike the asbestos, and therefore, improvement in safety can be attained.

In a case where the heat insulation material 410 is incorporated in the wall part of the refrigerator, the heat insulation material 410 may be a vacuum heat insulation panel that the inside of the outer packaging 412 is vacuumized. Each wall part may be configured to include foam urethane and the heat insulation material or include only the heat insulation material between the outer plate and the inner plate.

The heat insulation material according to the embodiment includes the core material constituted by the fiber made of an inorganic material. The fiber is a long fiber having at least one point where the fiber contacts itself. The fiber is a fine fiber of which the average fiber diameter is 1 µm or less. According to the embodiment, concerning the heat insulation material formed of the fiber which is made of the inorganic material, it is possible to attain improvement in the heat insulation performance thereof.

The refrigerator in the embodiment includes the heat insulation material according to the embodiment which is improved in the heat insulation performance as compared to the related art. Therefore, the refrigerator excellently high in the heat insulation performance can be provided.

The heat insulation material according to the embodiment can be applied to other than the refrigerator. The heat insulation material may not be vacuumized.

### (Other embodiments)

The above plural embodiments may be combined and carried out.

The embodiments are shown as merely examples, and are not intended to limit the scope of the invention. These novel embodiments can be carried out in other various modes, and various omissions, replaces, and modifications may be made within a scope not departing from the gist of the invention. These embodiments and modifications thereof are encompassed within the scope and gist of the invention as well as within the scope of the invention described in the claims and its equivalent.

## Claims

1. A heat insulation material comprising a core material constituted by a thin diameter fiber material having a fiber diameter of micro order to nano order, and reinforcing means for reinforcing a strength of the core material.

2. A heat insulation material comprising a core material formed by winding a belt-like continuous non-woven fabric in a continuous state, wherein
the non-woven fabric is formed of a resin fiber.

3. A heat insulation material comprising:
a core material constituted by a fiber; and
a supporting material maintaining a shape of the core material, wherein
the supporting material has a heat insulation surface corresponding part corresponding to a heat insulation surface of the core material, and normal line directions at at least two positions on the heat insulation surface corresponding part intersect each other.

4. A heat insulation material comprising:
a core material constituted by a fiber made of an inorganic material, wherein
the fiber has at least one point where the fiber contacts itself, and
an average fiber diameter of the fiber is 1 µm or less.

5. A core material included in the heat insulation material according to any one of claims 1 to 4.

6. A refrigerator provided with the heat insulation material according to any one of claims 1 to 4.

7. A manufacturing method of a heat insulation material comprising a step of providing reinforcing means for reinforcing a strength of a core material, the core material being constituted by a thin diameter fiber material having a fiber diameter of micro order to nano order.

8. A method for manufacturing a heat insulation material including a core material, comprising:
forming a belt-like continuous non-woven fabric formed of a resin fiber; and
forming the core material by winding the non-woven fabric in a continuous state.

9. A method for manufacturing a heat insulation material including a core material constituted by a fiber, comprising:
a supporting material putting-in step of putting a supporting material into an outer packaging, the supporting material maintaining a shape of the core material and having a heat insulation surface corresponding part corresponding to a heat insulation surface of the core material, wherein normal line directions at at least two positions on the heat insulation surface corresponding part intersect each other.
